# EUROPÄISCHE PATENTANMELDUNG

(11) **EP 3 660 620 A1**
(43) Veröffentlichungstag der Anmeldung: **03.06.2020**
(21) Anmeldenummer: 20152900.5
(22) Anmeldetag: 27.08.2013
(51) Int. Cl.: G05D 16/02, G05D 16/06

(54) **DRUCKREDUZIERVENTIL**

(62) Teilanmeldung aus: 13004212.0
(71) Anmelder: Georg Fischer Rohrleitungssysteme AG, 8201 Schaffhausen (CH)
(72) Erfinder: Jäckle, Timo, 78247 Hilzingen (DE)
(74) Vertreter: Fenner, Seraina

(57) **Zusammenfassung**

Druckreduzierventil für flüssige und gasförmige Medien insbesondere zur Regelung des Drucks in Rohrleitungssystemen vorzugsweise in Gebäuden, enthaltend ein Gehäuse vorzugsweise aus mindestens einem Ober- und Unterteil, ein Innengehäuse wobei das Innengehäuse eine Kolbenbohrung aufweist, eine Membrane zur Unterteilung des Gehäuses in einen fluidfreien und fluiddurchströmten Bereich, eine Druckeinstelleinheit, wobei die Druckeinstelleinheit eine Spindel, einen Federteller, einen Federhalter und mindestens eine Feder aufweist, ein Befestigungsmittel und einen Kolben, wobei der Kolben und die Membrane mittels Befestigungsmittel miteinander verbunden sind, wobei der Kolben in der Kolbenbohrung angeordnet ist und mindestens ein Dichtelement zwischen Kolben und Kolbenbohrung zur Abdichtung angeordnet ist, wobei der Kolben einteilig ausgebildet ist und das Dichtelement integral am Kolben oder integral am Innengehäuse angeordnet ist.

## Beschreibung

Die Erfindung betrifft ein Druckreduzierventil für flüssige und gasförmige Medien insbesondere zur Regelung des Drucks in Rohrleitungssystemen vorzugsweise in Gebäuden, enthaltend ein Gehäuse vorzugsweise aus mindestens einem Ober- und Unterteil, ein Innengehäuse wobei das Innengehäuse eine Kolbenbohrung aufweist, eine Membrane zur Unterteilung des Gehäuses in einen fluidfreien und fluiddurchströmten Bereich, eine Druckeinstelleinheit, wobei die Druckeinstelleinheit eine Spindel, einen Federteller, einen Federhalter und mindestens eine Feder aufweist, ein Befestigungsmittel und einen Kolben, wobei der Kolben und die Membrane mittels Befestigungsmittel miteinander verbunden sind, wobei der Kolben in der Kolbenbohrung angeordnet ist und mindestens ein Dichtelement zwischen Kolben und Kolbenbohrung zur Abdichtung angeordnet ist.

Druckreduzierventile werden hauptsächlich in der häuslichen und industriellen Wasserversorgung eingesetzt, jedoch sind sie auch in anderen Einsatzgebieten und mit anderen Medien aufzufinden. Auch Bereiche die hochreine Medien durch Rohrleitungssysteme befördern verwenden Druckreduzierventile bspw. in der Mikroelektornik, Life-Sience-Industrie, Spitälern und Forschung usw. Sie dienen dazu, den höheren Druck im primärseitigen Verteilnetz auf einen optimalen Druck für den sekundärseitigen Abnahmestrang zu reduzieren wodurch Armaturen und Verbraucher im Abnahmestrang vor zu hohen Drücken geschützt werden und dadurch die Lebenszeit der Armatur erhöht werden kann. Zudem kann die Geräuschentwicklung durch den Einbau eines Druckreduzierventils im Abnahmestrang vermindert, wie auch der Mediumsverbrauch reduziert werden, insbesondere in Wasserversorgungsnetzen.

Die DE 44 34 634 C2 offenbart ein Druckreduzierventil bei welchem die Einstellung des gewünschten Abgangsdruckes einfach handhabbar ist. Das in das Gehäuse einströmende Medium weist einen hohen bzw. zu hohen Druck für die weitere Nutzung auf. Durch die Einstelleinheit kann der gewünschte Abgangsdruck eingestellt werden indem die Feder entsprechend vorgespannt wird. Das wiederum ergibt die entsprechende Kraft auf den Kolben, der den Abgangsdruck regelt. Ist die Feder stark zusammengepresst, erzeugt sie eine hohe Gegenkraft auf den Kolben, wodurch der gewünschte Abgangsdruck hoch ist. Der Kolben bzw. der Dichtsitz, der sich zwischen Ventilelement und ringförmigem Vorsprung des Gehäuses befindet, schliesst sich erst, wenn der aufbauende Druck im Ventil bzw. in der Kolbenkammer so gross ist, dass er den zulässigen Abgangsdruck überschreitet, wodurch der Kolben gegen die Federkraft gedrückt wird und das Ventilelement den Ventilsitz schliesst. Der Kolben und das Ventilelement mit Stange besteht aus mehreren Einzelteilen, zudem sind Dichtelemente daran angeordnet, die die Dichtheit gewährleisten, die ebenfalls als separate Teile ausgebildet sind.

Ein derartiges Druckreduzierventil ist ungeeignet für den Einsatz bei hochreinen Medien, da durch die vielen Einzelteile die Möglichkeit einer Verunreinigung erhöht ist. Zudem sind Dichtelemente aus Elastomeren, wie sie üblicherweise eingesetzt werden, für die Anwendung bei hochreinen Medien unzulässig, da sie einen unerwünschten Abrieb verursachen der das Reinstmedium verunreinigen würde.

Es ist Aufgabe der Erfindung ein Druckreduzierventil vorzuschlagen, welches sich für die Anwendung für hochreine Medien eignet und somit kein Abrieb der Dichtelemente entstehen kann. Zudem sollten Stellen vermieden werden an denen leicht Verunreinigungen entstehen können bzw. unnötige Kanten und Verbindungsstellen von Einzelteilen sollten im mediumdurchströmten Bereich auf ein Minimum reduziert werden. Des Weiteren muss eine komplette Entleerung gewährleistet sein indem kein Restmedium bei einer vollständigen Entleerung an unzugänglichen Stellen wie bspw. in Sacklochbohrungen oder Hinterschnitten verbleiben darf.

Diese Aufgabe wird erfindungsgemäss dadurch gelöst, dass der Kolben einteilig ausgebildet ist und das Dichtelement integral am Kolben oder integral am Innengehäuse angeordnet ist wobei das Dichtelement und der Kolben oder das Dichtelement und das Innengehäuse einteilig ausgebildet sind.

Die integrale Anordnung des Dichtelements bringt den Vorteil mit sich, dass dadurch, dass das Dichtelement und der Kolben bzw. das Innengehäuse einteilig sind keine unnötigen Übergänge von Einzelteilen, die miteinander verbunden werden, entstehen. Dadurch können Ritzen und unzugängliche Flächen usw. vermieden und somit die Verunreinigung von Teilen insbesondere an unzugänglichen Stellen, wie sie aus Ventilen aus dem Stand der Technik bekannt sind, stark reduziert werden. Die Abdichtung erfolgt direkt zwischen Kolben bzw. durch das integrale Dichtelement am Kolben und der Mantelfläche der Kolbenbohrung des Innengehäuses oder im umgekehrten Falle zwischen dem integral am Innengehäuse angeordneten Dichtelement und der Aussenfläche des Kolbens. Somit kann auf ein separates Dichtelement wie bspw. einen O-Ring verzichtet werden, sowohl im Kolben als auch in der Kolbenbohrung bzw. am Innengehäuse. Der Kolben ist in der Kolbenbohrung angeordnet sowie das dazwischenliegende Dichtelement zur Abdichtung des Systems. Das Dichtelement kann, wie zuvor erwähnt, integral am Kolben oder integral am Innengehäuse in der Kolbenbohrung angeordnet sein. Der Kolben ist mittels eines Befestigungsmittels mit der Membrane verbunden. Steigt nun der Abgangsdruck über den mittels Druckeinstelleinheit voreingestellten Wert, drückt das über die im Innengehäuse angeordneten Bypassbohrungen strömende Medium die Membrane gegen die Federkraft der Druckeinstelleinheit hoch, wodurch der Kolben in der Kolbenbohrung ebenfalls mithochgezogen wird. Das integrale Dichtelement des Kolbens bzw. des Innengehäuses dichtet an der Mantelfläche der Kolbenbohrung bzw. an der Aussenfläche des Kolbens vorzugsweise oberhalb der Durchströmungsöffnungen bezüglich des durchströmenden Mediums ab. Sobald sich der Abgangsdruck aufgrund des geschlossenen Ventils vermindert und entsprechend der Druck unterhalb der Membrane abnimmt, senkt sich der Kolben und es öffnet sich der Ventilsitz, der durch die Dichtkante des Innengehäuses gebildet wird. Das Dichtelement, welches integral angeordnet ist, ist vorzugweise als Dichtlippe ausgebildet. Durch die Formgebung einer Dichtlippe wird kein grosser Widerstand bezüglich der Verschiebung des Kolbens in der Kolbenbohrung erzeugt, was dem Kolben ein leichtes Verschieben ohne grossen Kraftaufwand in der Kolbenbohrung ermöglicht, wodurch eine geringe Hysterese realisiert werden kann. Das bedeutet, dass bei dem erfindungsgemässen Ventil der effektive Abgangsdruck nahe beim voreingestellten Abgangsdruck liegt, da das Dichtelement bzw. die Dichtlippe sowie das Material aus dem der Kolben besteht die Reibung bzw. den Widerstand gering ausfallen lassen, was ein grosser Vorteil ist.

Alternativ besteht die Möglichkeit, dass sich das Innengehäuse entlang des Kolbens verschiebt. Anstelle des Kolbens hebt und senkt sich das Innengehäuse entlang des stehenden Kolbens, wodurch das Ventil entsprechend geöffnet oder geschlossen wird.

Das Dichtelement bzw. die Dichtlippe ist vorzugsweise druckunterstützt. Das Medium, welches durch die Durchströmungsöffnungen hindurch fliesst bis hin zum Dichtelement bzw. der Dichtlippe, wirkt auf die selbige, was die Dichtheit zwischen Kolben und Kolbenbohrung des Innengehäuses unterstützt.

Um die Funktionsfähigkeit des Ventils zu gewährleisten und die auftretenden Drücke möglichst unverfälscht zu ermitteln und zu regeln ist es notwendig, dass der Kolben in der Kolbenbohrung einen möglichst geringen Gleitwiderstand hervorruft. Das wird dadurch erreicht, dass der Kolben aus einem Material hergestellt ist, dass eine hohe Gleitfähigkeit bzw. einen geringen Reibungswiderstand aufweist und somit eine tiefen Reibungskoeffizienten zwischen Kolben und Kolbenbohrung vorliegt. Der Kolben ist vorzugsweise aus mindestens einem der Materialen PTFE, PFA, PVDF und /oder TFM hergestellt oder aus einem Material, das mindestens einen Zusatz der vorher genannten Materialien aufweist. Der Kolben kann aus einem der Materialen hergestellt sein wie auch Materialkombinationen. Mischungen bzw. Compounds eignen sind ebenfalls zur Herstellung des Kolbens. Alternativ kann auch eine Verstärkung des Klobens durch ein weiteres Material miteingebracht werden.

Zur Druckbegrenzung des Mediums bzw. zur Schliessung des Ventils, aufgrund eines ermittelten Abgangsdrucks der über dem vordefinierten Abgangsdruck liegt, dient der Dichtkonus am Kolben. Bei geschlossener Ventilstellung aufgrund zu hohem Abgangsdruck ist der Kolben, infolge des Drucks, welcher auf die Membrane wirkt hoch gezogen bzw. liegt der Dichtkonus am Ventilsitz des Innengehäuses an, wobei der Ventilsitz durch die Dichtkante gebildet wird. Dem Medium wird dadurch das Durchströmen des Ventils verunmöglicht. Der Dichtkonus ist vorzugsweise integral am Kolben angeordnet. Vorstellbar sind jedoch auch Ausführungsformen bei welchen der Dichtkonus als separates Teil ausgeführt ist und am Kolben befestigt werden kann, wobei das Einsatzgebiet dieses Ventils dann eventuell beschränkt wäre.

Zur Einstellung des Abgangsdrucks dient die Druckeinstelleinheit. Entsprechend des gewünschten Abgangsdrucks wird die Feder gespannt oder entspannt indem sie mehr oder weniger zusammengedrückt bzw. vorgespannt wird mit Hilfe des Federhalters. Reicht der einstellbare Druck aufgrund einer Feder nicht aus, kann eine zweite Feder in der Druckeinstelleinheit angeordnet werden. Damit sich die Grösse des Druckreduzierventils nicht verändert bzw. das Druckreduzierventil möglichst kompakt ist, sind die Federn ineinander angeordnet. Das heisst, dass zwei Federn verwendet werden, die unterschiedliche Federndurchmesser aufweisen damit sie ineinander angeordnet werden können. Durch die Möglichkeit der Anordnung von zwei Federn im Ventil erhält das Ventil einen grösseren Einstellbereich für den Abgangsdruck, da einerseits jede der Feder einzeln verwendet werden kann und andererseits auch beide zusammen.

Ein Ausführungsbeispiel der Erfindung wird anhand der Figuren beschrieben, wobei sich die Erfindung nicht nur auf das Ausführungsbeispiel beschränkt. Es zeigen:
Fig. 1 einen Längsschnitt durch ein erfindungsgemässes Druckreduzierventil in geöffneter Stellung und
Fig. 2 einen Längsschnitt durch ein erfindungsgemässes Druckreduzierventil in geschlossener Stellung.

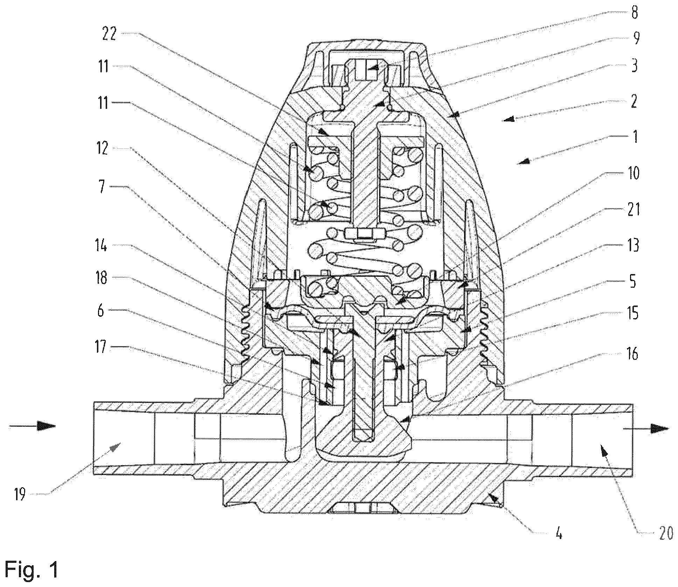

Fig. 1 stellt ein erfindungsgemässes Druckreduzierventil 1 dar. Das Gehäuse 2 ist vorzugsweise aus einem Oberteil 3 und Unterteil 4 gebildet. Im Gehäuse 2 ist ein Innengehäuse 5 angeordnet. Durch das Zusammenschrauben des Gehäuseoberteils 3 und Gehäuseunterteils 4, wird zwischen dem Innengehäuse 5 und dem Haltering 21 eine Membrane 7 festgeklemmt, die das Ventil 1 in einen mediumsfreien und einen mediumsdurchströmten bzw. mediumsaufweisenen Bereich trennt. Vorstellbar sind auch andere Bauweisen eines Druckreduzierventils bspw. solche bei denen die beiden Gehäuseteile mittels separater Befestigungsmittel miteinander verbunden werden oder solche bei denen keine weitere Distanzierung notwendig ist. Das Innengehäuse 5 weist Durchströmungsöffnungen 15 auf, durch die das durch den Einströmungsstutzen 19 hineingeströmte Medium anschliessend hindurchströmt und bei geöffneter Ventilstellung weiter durch den unteren Bereich der Kolbenbohrung 6 am Ventilsitz 17 vorbei Richtung Auslassstutzen 20 strömt.

Der Kolben 6 wird durch die Federn 11, der Druckeinstelleinheit 8 entsprechend nach unten gedrückt bzw. geöffnet. Die entsprechende Federkraft, die durch die vorgespannten Federn 11 mit Hilfe des Federhalters 22 auf den Federteller 10 bzw. auf das Befestigungsmittel 12 wirkt, hält das Ventil 1 geöffnet. Die Stärke der Vorspannung der Federn 11 wird über die Spindel 9 erreicht, mittels der die Federn 11 auf eine gewünschte Länge zusammengespannt werden können, was die entsprechende Vorspannkraft bzw. Federkraft ergibt. Es besteht auch die Möglichkeit nur eine Feder 11 in das Ventil 1 vorzusehen, das vermindert die Federkraft wodurch der einstellbare Abgangsdruck im einem niedrigeren Bereich liegt als wenn zwei Federn 11 eingebaut sind und dadurch eine höhere Federkraft aufweisen und somit einen höheren Abgangsdruck zulassen. Durch diese Anordnungsmöglichkeit der Federn 11 ist eine breite Spannweite des einstellbaren Abgangsdrucks möglich ohne die Baugrösse des Ventils zu verändern.

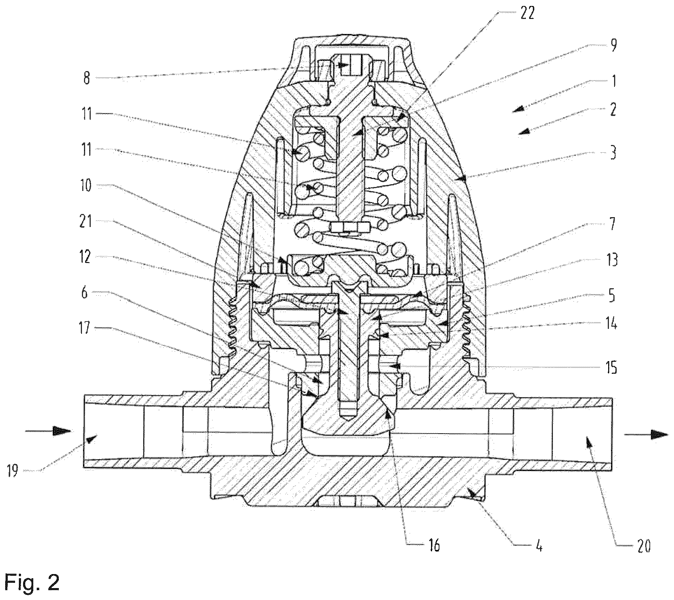

Fig. 2 zeigt das Ventil 1 in geschlossener Stellung, Der Abgangsdruck liegt somit über dem voreingestellten Abgangsdruck. Das Medium strömt über die Bypassbohrungen 18, welche im Innengehäuse angeordnet sind hindurch in den Raum unterhalb der Membrane 7. Der Druck der dort entsteht drückt gegen die Federkraft. Sobald die Kraft durch das Medium unterhalb der Membrane 7 höher ist als der zulässige Abgangsdruck bzw. die eingestellte Federkraft, werden die Federn 11 weiter zusammengepresst und der Kolben 13 wird in der Kolbenbohrung 6 durch die Membrane 7 nach oben gezogen. Das integral am Kolben 13 angeordnete Dichtelement 14 dichtet die Kolbenbohrung 6 ab. Durch das durch die Durchströmungsöffnungen 15 einströmende Medium wird das Dichtelement 14 druckunterstützt. Das Dichtelement 14 ist als Dichtlippe 14 ausgebildet, wodurch ein möglichst geringer Widerstand zwischen Kolben 16 und Kolbenbohrung entsteht aber die Dichtheit trotzdem gewährleistet. Durch den hochgezogenen Kolben 13 ist der Ventilsitz 17 geschlossen da der Dichtkonus 16 des Kolbens 13 den Ventilsitz 17 abdichtet. Der Kolben 13 ist vorzugsweise aus einem gleitfähigen Material wodurch das Ventil 1 einwandfrei auf den Abgangsdruck reagieren kann. Senkt sich der Abgangsdruck unter den voreingestellten Wert, senkt sich auch der Druck unterhalb der Membrane 7. Der Kolben 13 sinkt entsprechend ab und das Medium kann das Ventil 1 wieder durchströmen.

### Bezugszeichenliste

- 1: Druckreduzierventil
- 2: Gehäuse
- 3: Gehäuseoberteil
- 4: Gehäuseunterteil
- 5: Innengehäuse
- 6: Kolbenbohrung
- 7: Membrane
- 8: Druckeinstelleinheit
- 9: Spindel
- 10: Federteller
- 11: Feder
- 12: Befestigungsmittel
- 13: Kolben
- 14: Dichtelement / Dichtlippe
- 15: Durchströmungsöffnung
- 16: Dichtkonus
- 17: Ventilsitz / Dichtkante
- 18: Bypassbohrung
- 19: Einlassstutzen
- 20: Auslassstutzen
- 21: Haltering
- 22: Federhalter

## Patentansprüche

1. Druckreduzierventil (1) für flüssige und gasförmige Medien insbesondere zur Regelung des Drucks in Rohrleitungssystemen vorzugsweise in Gebäuden, enthaltend ein Gehäuse (2) vorzugsweise aus mindestens einem Ober (3)- und Unterteil (4), ein Innengehäuse (5) wobei das Innengehäuse (5) eine Kolbenbohrung (6) aufweist, eine Membrane (7) zur Unterteilung des Gehäuses (2) in einen fluidfreien und fluiddurchströmten Bereich, eine Druckeinstelleinheit (8), wobei die Druckeinstelleinheit (8) eine Spindel (9), einen Federteller (10), einen Federhalter (22) und mindestens eine Feder (11) aufweist, ein Befestigungsmittel (12) und einen Kolben (13), wobei der Kolben (13) und die Membrane (7) mittels Befestigungsmittel (12) miteinander verbunden sind, wobei der Kolben (13) in der Kolbenbohrung (6) angeordnet ist und mindestens ein Dichtelement (14) zwischen Kolben (13) und Kolbenbohrung (6) zur Abdichtung angeordnet ist, **dadurch gekennzeichnet, dass** der Kolben (13) einteilig ausgebildet ist und das Dichtelement (14) integral am Kolben (13) oder integral am Innengehäuse (5) angeordnet ist, wobei das Dichtelement (14) und der Kolben (13) oder das Dichtelement (14) und das Innengehäuse (5) einteilig ausgebildet sind.

2. Druckreduzierventil (1) nach Anspruch 1, **dadurch gekennzeichnet, dass** der Kolben (13) verschiebbar in der Kolbenbohrung (6) angeordnet ist.

3. Druckreduzierventil (1) nach Anspruch 1, **dadurch gekennzeichnet, dass** das Innengehäuse (5) entlang des Kolbens (13) verschiebbar angeordnet ist.

4. Druckreduzierventil (1) nach einem der Ansprüche 1 bis 3, **dadurch gekennzeichnet, dass** das Dichtelement (14) an der Mantelfläche der Kolbenbohrung (6) dichtet, vorzugsweise oberhalb der Durchströmungsöffnungen (15) des Innengehäuses (5).

5. Druckreduzierventil (1) nach einem der Ansprüche 1 bis 3, **dadurch gekennzeichnet, dass** das Dichtelement (14) an der Aussenfläche des Kolbens (13) dichtet, vorzugsweise oberhalb der Durchströmungsöffnungen (15) des Innengehäuses (5).

6. Druckreduzierventil (1) nach einem der Ansprüche 1 bis 5, **dadurch gekennzeichnet, dass** das Dichtelement (14) druckunterstützt ist.

7. Druckreduzierventil (1) nach einem der Ansprüche 1 bis 6, **dadurch gekennzeichnet, dass** das Dichtelement (14) die Form einer Dichtlippe (14) aufweist.

8. Druckreduziervorrichtung (1) nach eine der Ansprüche 1 bis 9, **dadurch gekennzeichnet, dass** der Kolben (13) aus einem Material hergestellt ist, das eine hohe Gleitfähigkeit bzw. einen geringen Reibungswiderstand aufweist.

9. Druckreduzierventil (1) nach einem der Ansprüche 1 bis 8, **dadurch gekennzeichnet, dass** der Kolben (13) aus PTFE, PFA, PVDF und/oder TFM ist oder aus einem Material, das mindestens einen Zusatz dieser Materialien aufweist.

10. Druckreduzierventil (1) nach einem der vorangehenden Ansprüche, **dadurch gekennzeichnet, dass** der Kolben (13) einen Dichtkonus (16) aufweist.

11. Druckreduzierventil (1) nach einem der vorangehenden Ansprüche, **dadurch gekennzeichnet, dass** der Dichtkonus (16) integral am Kolben (13) angeordnet ist.

12. Druckreduzierventil (1) nach einem der vorangehenden Ansprüche, **dadurch gekennzeichnet, dass** die Druckeinstelleinheit (8) mindestens zwei Federn (11) aufweist.

13. Druckreduzierventil (1) nach Anspruch 9, **dadurch gekennzeichnet dass** die Federn (11) ineinander angeordnet sind.
